# EUROPÄISCHE PATENTSCHRIFT

(11) **EP 0 801 243 B1**
(45) Veröffentlichungstag und Bekanntmachung des Hinweises auf die Patenterteilung: **17.07.2002**
(21) Anmeldenummer: 97105665.0
(22) Anmeldetag: 05.04.1997
(51) Int. Cl.: F16D 33/10

(54) **Hydrodynamische Kupplung**
Hydrodynamic coupling
Accouplement hydrodynamique

(30) Priorität: 12.04.1996 DE 19614589
(43) Veröffentlichungstag der Anmeldung: 15.10.1997
(73) Patentinhaber: Voith Turbo GmbH & Co. KG, 89522 Heidenheim (DE)
(72) Erfinder: Adleff, Kurt, 74564 Crailsheim (DE); Hercher, Gerd-Peter, 74579 Fichtenau-III (DE); Tietz, Maik, 74564 Crailsheim (DE)
(74) Vertreter: Dr. Weitzel & Partner

(56) Entgegenhaltungen:
- DE-A- 2 305 539
- DE-A- 3 047 361
- DE-B- 1 037 779
- DE-C- 867 030
- DE-C- 874 712
- DE-C- 883 377
- GB-A- 747 392
- US-A- 1 859 607
- US-A- 3 075 354

## Beschreibung

Die Erfindung betrifft eine hydrodynamische Kupplung mit einem Pumpenrad und einem Turbinenrad, die einen torusförmigen Arbeitsraum miteinander bilden, und die eine Speicherkammer aufweisen.

Kupplungen dieser Art sind aus einer Vielzahl von Veröffentlichungen bekannt geworden. Arbeitsraum und Speicherkammer sind hierbei leitend miteinander verbunden. Die Speicherkammer gibt beim Anlaufen des Antriebsmotors mit einer gewissen Verzögerung Betriebsmittel an den Arbeitsraum ab, so daß die Drehmomentübertragung im Anfangsbereich sehr sanft stattfindet, so daß die beteiligten Komponenten, vor allem der Antriebsmotor, geschont werden. Auf die folgenden Dokumente wird verwiesen:
(1) GB-A-922 415
(2) GB-A-1 000 565
(3) EP 062 274 A3

Hydrodynamische Kupplungen mit konstanter Füllung (Bauart T) werden in der Regel als Anfahr- und Überlastkupplung eingesetzt.

Es besteht, entsprechend der Kennlinie der Turbokupplung, eine Abhängigkeit zwischen dem übertragenen Moment und dem sich zwischen Pumpenrad und Turbinenrad einstellenden Schlupf. Das übertragbare Moment bei einem vorgegebenen Schlupf wird durch die eingefüllte Ölmenge und die Antriebsdrehzahl bestimmt

Eine Änderung der Kupplungsfüllung im Betrieb um eine Änderung des Verhältnisses Moment/Schlupf bei gleichbleibender Antriebsdrehzahl sowie die Abkoppelung des Abtriebs ist nicht möglich.

Das Anfahrmoment kann beispielsweise durch eine Verzögerungskammer reduziert werden. Arbeitsraum und Verzögerungskammer stehen über Düsen miteinander in Verbindung. Je nach Dimensionierung der Düsen gelangt Arbeitsmedium mehr oder minder schnell aus der Verzögerungskammer in den Arbeitsraum. Hierdurch läßt sich der zeitliche Anstieg des Drehmomentes beeinflussen.

Diese Kupplungsbauart bietet den Vorteil der Wärmeabfuhr über die Oberfläche, da die kreislaufumschließenden Teile in Luft rotieren und durch geeignete Ausformung für die Kühlung optimiert werden können.

Im Gegensatz zu Kupplungen mit konstanter Füllung an Arbeitsmedium gibt es auch Kupplungen, bei denen das Arbeitsmedium einem externen Behälter entnommen wird. Dabei sind die umlaufenden Kupplungsteile durch ein feststehendes, öldichtes Gehäuse umschlossen. Damit läßt sich der Füllungsgrad der Kupplung bei gleichbleibender Antriebsdrehzahl verändern, und damit auch das Moment-Schlupf-Verhältnis.

Diese Anwendungen werden in der Regel zur Verstellung der Abtriebsdrehzahl benutzt. Die entstehende Wärme wird über einen Externkühler abgeführt.

Eine kupplung gemäß den Oberbegriff des Anspruchs 1 ist aus DE-A-2 305 539 bekant.

Der Erfindung liegt die Aufgabe zugrunde, eine hydrodynamische Kupplung der eingangs definierten Art derart zu gestalten, daß sie bei geringem baulichen Aufwand und niedrigen Herstellungskosten ihre Funktionen einwandfrei erfüllt, daß der Füllungsgrad des Arbeitsraumes schnell und zuverlässig beherrschbar ist, und daß keine externe Ölversorgungsanlage notwendig ist Insbesondere soll das übertragbare Moment der Kupplung während des Betriebes willkürlich verändert werden können.

Diese Aufgabe wird durch die Merkmale von Anspruch 1 gelöst.

Die Erfindung ist anhand der Zeichnungen näher erläutert.

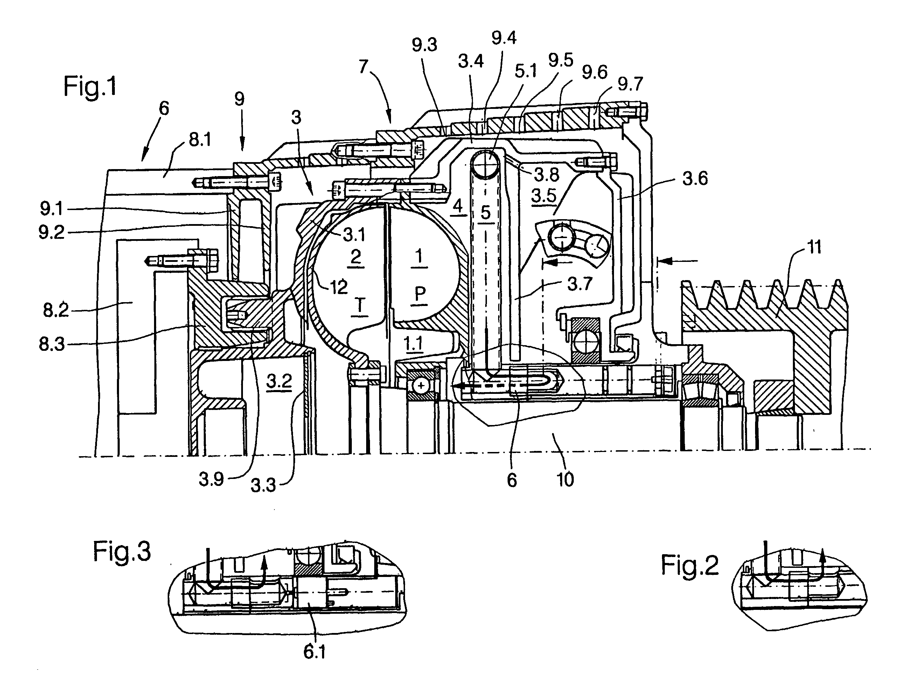

Figur 1 zeigt eine hydrodynamische Kupplung in einem Axialschnitt. Ein Pumpenrad 1 und ein Turbinenrad 2 bilden miteinander einen torusförmigen Arbeitsraum. Ein Innengehäuse 3 umschließt mit einer wannenförmigen Wandung 3.1 einen Teil des Turbinenrades 2. Am radial inneren Ende des Wandungsteiles 3.1 ist ein erster Stauraum 3.2 vorgesehen. Dieser ist durch eine Ringscheibe 3.3 gegen das Turbinenrad hin begrenzt. Das Innengehäuse weist ferner einen Wandteil 3.4 auf. Dieser ist ausgebaucht, so daß er die Gestalt einer ringförmigen Wanne hat. Man erkennt weiterhin eine Speicherkammer 3.5. Diese ist aus einem weiteren Wandteil 3.6 und einer Trennwand 3.7 gebildet. Am radial äußeren Ende der Trennwand 3.7 befindet sich eine Bohrung 3.8. Diese stellt eine leitende Verbindung her zwischen der genannten Wanne und der Speicherkammer 3.5.

Im Zwischenraum 4 zwischen dem Pumpenrad 1 und der Trennwand 3.7 befindet sich eine Staudruckpumpe 5. Diese hat die Gestalt eines Rohrstutzens. Am radial äußeren Ende befindet sich ein Mundstück 5.1. Im vorliegenden Falle verläuft der Rohrstutzen senkrecht zur Maschinenachse. Er könnte aber auch gegen die Senkrechte geneigt sein.

Die Staudruckpumpe 5 steht an ihrem radial inneren Ende in leitender Verbindung mit dem Arbeitsraum, der aus dem Pumpenrad 1 und dem Turbinenrad 2 gebildet ist. Dies ist veranschaulicht durch den stark ausgezogenen Pfeil. Die leitende Verbindung ist in diesem Falle hergestellt durch eine entsprechende Position eines Drehventiles 6. Natürlich käme auch jede andere Art von Ventil in Betracht.

In den Figuren 2 und 3 hat das Drehventil eine andere Drehposition. Hierbei ist eine leitende Verbindung hergestellt zwischen der Staudruckpumpe 5 einerseits und der Speicherkammer 3.5 andererseits. Auch hier zeigt wiederum der stark ausgezogene Pfeil den Strömungsverlauf an. In Figur 3 erkennt man einen Drehmagneten 6.1, der das Ventil 6 betätigt.

Das Gehäuse 3 ist umgeben von einem Außengehäuse 7. Die gesamte hydrodynamische Kupplung ist derart gestaltet, daß sie durch aufstecken an einen Antriebsmotor 8 anschließbar ist. Von diesem erkennt man ein Gehäuse 8.1 sowie eine Schwungscheibe 8.2, an der ein ringförmiger Mitnehmer 8.3 angeschraubt ist. An Wandteil 3.1 sind eine Mehrzahl von Mitnehmerklauen 3.9 angeformt.

Das Außengehäuse 7 weist eine besondere Belüftung auf. Zwischen dem Motor 8 und dem Turbinenrad 2 befindet sich Lufteinlaß 9. Dieser ist aus zwei Ringscheiben 9.1 und 9.2 gebildet, die einen ringförmigen, radialen Einlaßkanal bilden. Der Einlaßkanal ist durch eine Vielzahl von nicht dargestellten Bohrungen an die Außenumgebung angeschlossen, so daß von außen her Luft eintreten kann. Die Luft strömt um die radial innere Kante der Ringscheibe 9.2 herum, entlang dem Wandteil 3.1, dem Luftforderschaufeln angeformt sind, und tritt sodann durch Bohrungen 9.3 bis 9.7 aus dem Außengehäuse 7 wieder aus. Dabei findet eine intensive Kühlung der inneren Bauteile der hydrodynamischen Kupplung statt, und zwar durch Vorbeistreichen der kalten Luft an der Oberfläche des Gehäuses 3.

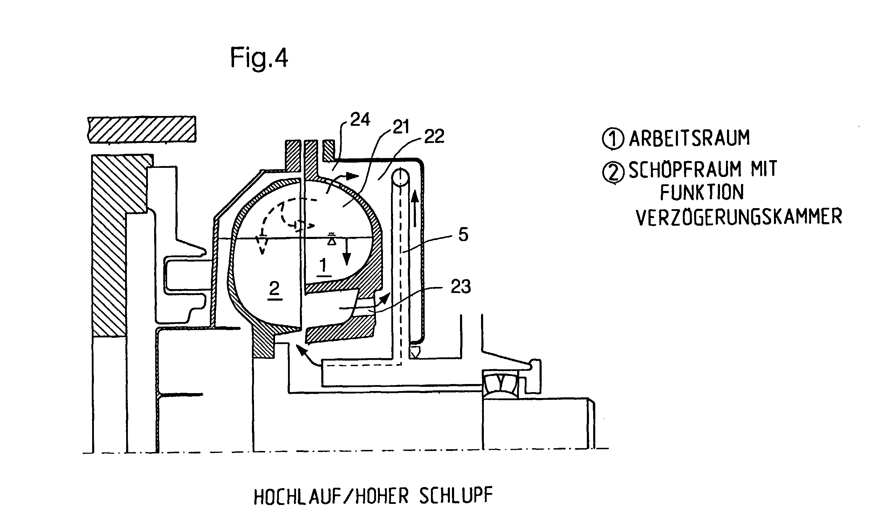

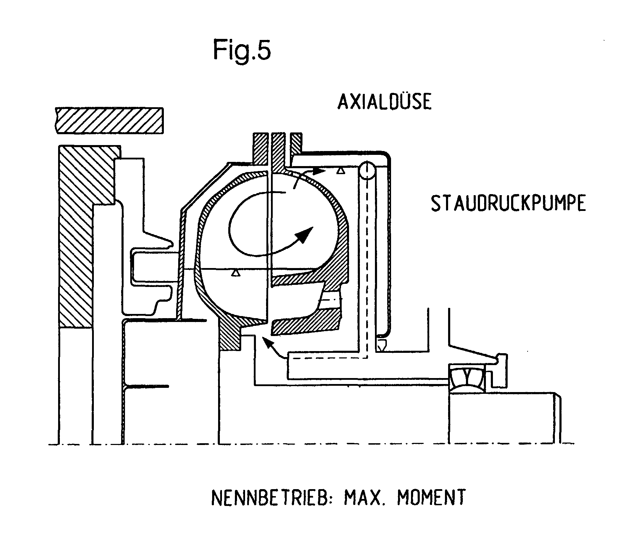

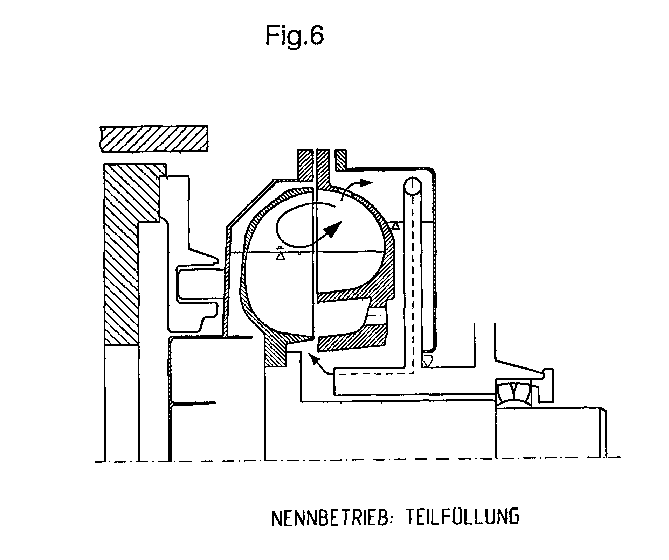

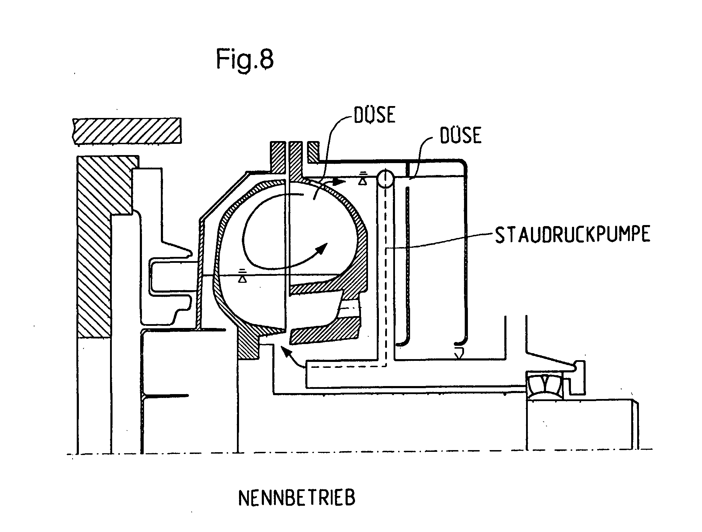

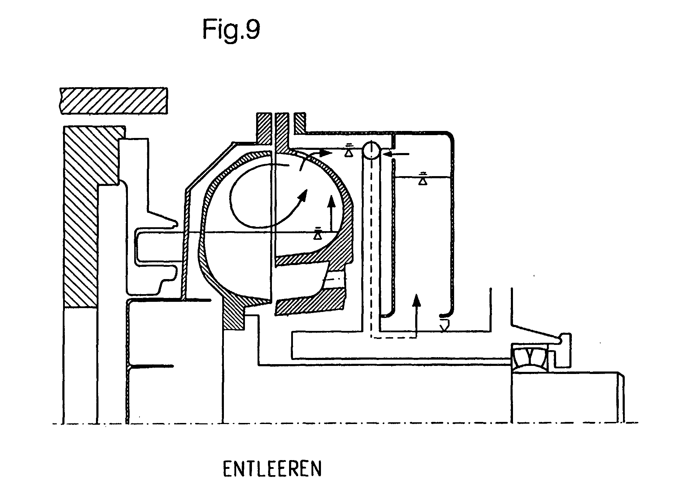

Die Figuren 4 bis 9 veranschaulichen in schematischer Darstellung weitere wichtige Ausführungsformen von erfindungsgemäßen Kupplungen.

Man erkennt auch hierbei wieder die wesentlichen Teile der Kupplung, nämlich das Pumpenrad 1, das Turbinenrad 2, die Staudruckpumpe 5, den Arbeitsraum 21 und den Pumpenraum 22. Der Pumpenraum 22 ist hierbei derart dimensioniert, daß die Füllung im Arbeitsraum 21 im Anfahrzustand stark reduziert ist. Das im Pumpenraum 22 befindliche Öl wird durch die Staudruckpumpe 5 abgeschöpft und dem Arbeitsraum 21 radial innen zugeführt. Das Pumpenrad 1 weist Düsenbohrungen 23, 24 auf, über die eine leitende Verbindung zwischen Arbeitsraum 21 und Pumpenraum 22 hergestellt wird. Durch die entsprechende Abstimmung der Düsenbohrungen sowie durch eine entsprechende Einstellung des Ventiles (hier nicht dargestellt) läßt sich der zeitliche Verlauf des Momentenanstieges bis zur völligen Füllung des Arbeitsraumes 21 festlegen.

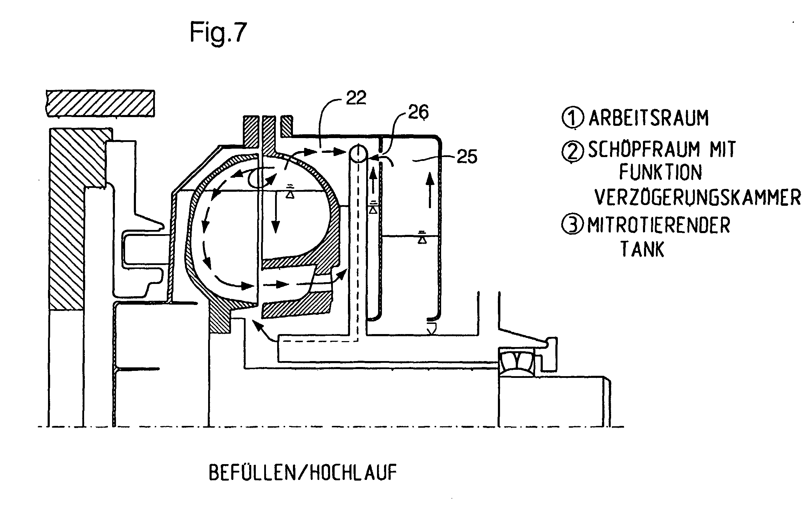

Bei den Ausführungsformen gemäß der Figuren 7 bis 9 ist ein zusätzlicher Speicherraum 25 vorgesehen. Dieser ist gegen den Pumpenraum 22 durch eine Trennwand 3.7 abgegrenzt. Pumpenraum 22 und zusätzlicher Speicherraum 25 stehen über Düsenbohrungen 26 in leitender Verbindung miteinander. Das Ventil (nicht dargestellt) im Staurohr kann wahlweise derart geschaltet werden, daß das Öl aus dem Pumpenraum 22 zum Arbeitsraum oder zum zusätzlichen Speicherraum strömt.

Durch geeignete Abstimmung der Düsenbohrungen und des Ventilquerschnittes kann das übertragbare Moment der Kupplung - bis auf das Luftventilationsmoment - reduziert werden.

Folgende weitere Merkmale können wichtig sein:
* die Staudruckpumpe ist so ausgeführt, daß es auch bei größerer Eintauchtiefe einen geringen Strömungswiderstand bietet
* die Staudruckpumpe ist als Rohr mit Rohrbogen oder als ringförmige Scheibe mit im Außendurchmesser tangental eingebrachten Öffnungen ausgeführt
* die Staudruckpumpe ist mit zwei um 180° zueinander verdrehten Öffnungen ausgestattet, um eine Drehrichtungsunabhängigkeit zu erreichen
* die Staudruckpumpe ist so dimensioniert, daß im ungedrosselten Zustand in jedem Betriebszustand die durch die verschiedenen Düsen angebotenen Ölmengen abgeschöpft werden können
* die Schöpfschale und der Speicherraum sind für bessere Wärmeabfuhr an der Außenfläche verrippt
* der Arbeitsraum, die Schöpfschale und der Speicherraum sind im Stillstand kommunizierende Gefäße
* durch Lage und Größe von Speicherraum und Schöpfschale wird die Anfahrfüllung im Arbeitsraum und damit das Anfahrmoment bestimmt
* durch geeignete Maßnahmen (WDR zwischen Schöpfschale und Speicherraum, radial nach oben gerichtete Staudruckpumpe, zum Arbeitsraum und Schöpfschale dicht schließendes Ventil, im Stillstand geschlossene Kugelventile in den radial außenliegenden Düsen zwischen Speicherraum und Schöpfschale) kann das Anfahrmoment auf das Niveau der Luftventilation reduziert werden
* alternativ zu Düsen kann die Entleerung des Speicherraumes durch eine Staudruckpumpe erfolgen, die durch ein Ventil geschaltet werden kann
* die Not-Aus-Funktion durch Schnellentleerventile zwischen Arbeitsraum und Pumpschale (Funktion "Arbeitsraum gefüllt" = SEV geschlossen durch Öl aus der Staudruckpumpe bewirkt)
* die Lagerschmierung durch von der Staudruckpumpe versorgte Bohrungen
* die Ventilfunktion schwarz-weiß, proportional oder getaktet
* die Ventilausführung: Schieber-, Drehschieber-, Sitz-, Kolbenventil, Ventilklappe, einstellbare Drossel, Blende
* die Ventilbetätigung: elektrisch, hydraulisch, pneumatisch, manuell, beliebige Kombination
* die Temperaturüberwachung
* dynamische Rückfüllung in die Schöpfschale und/oder den Speicherraum bei hohem Schlupf durch geeignete Bohrungen
* stufenlose Verstellung der Abtriebsdrehzahl durch Änderung des Ventilquerschnitts
* Anschlußmöglichkeit für externen Wärmetauscher.

Im radial inneren Bereich des Pumpenrades 1 ist ein weiterer Stauraum 1.1 gebildet, der ebenfalls dazu dient, das Anfahren zu verzögern und damit sanft zu gestalten.

Der Kraftfluß verläuft wie folgt:
Motor 8 treibt die Schwungscheibe 8.2 an. Diese nimmt den Mitnehmer 8.3 mit. Von dort aus wird ein Drehmoment auf die Mitnehmerklauen 3.9 übertragen, und damit auf das Pumpenrad 1. Von Pumpenrad 1 erfolgt die Drehmomentübertragung hydrodynamisch auf das Turbinenrad 2, und von dort auf eine Welle 10 und eine Keilriemenscheibe 11.

Die hydrodynamische Kupplung gemäß der Erfindung arbeitet völlig autark, das heißt ohne eine externe Ölversorgungsanlage. Das Aufnahmevolumen der Speicherkammer 3.5 ist entsprechend dem Volumen des Arbeitsraumes bemessen.

Das Ventil läßt sich von außen her beliebig schalten, und zwar zum einen in den beiden Extrempositionen, die hier dargestellt sind, um eine leitende Verbindung zwischen der Staudruckpumpe entweder mit dem Arbeitsraum oder mit der Speicherkammer 3.5 herzustellen. Das Ventil 6 läßt sich aber auch in Zwischenpositionen einstellen, so daß sehr feinfühlig unterschiedliche Betriebsverhalten erzeugt werden können.

Stauraum 3.2 steht über einen Ringspalt 12 zwischen dem Turbinenrad 2 und dem Wandteil 3.1 mit dem Arbeitsraum in leitender Verbindung. Da dies die einzige leitende Verbindung zwischen dem Stauraum 3.2 und dem Arbeitsraum ist, findet über Ringspalt 12 eine sehr stark verzögerte Kühlung des Arbeitsraumes nach dem Stillstand statt

Bei geschlossenen hydrodynamischen Kupplungen mit konstanter Füllung ist es bekannt, Maßnahmen zu treffen, um Übertemperaturen des Arbeitsmediums nicht entstehen zu lassen, und damit eine Schädigung der Kupplung zu verhindern. Im allgemeinen verwendet man hierbei Schmelzsicherungsschrauben. Das eingebrachte Lot schmilzt bei einer definierten Temperatur; hierdurch wird das Arbeitsmedium aus dem Arbeitsraum entlassen.

Bei den bekannten Kupplungen wird nicht etwa die Temperatur des Arbeitsmediums selbst gemessen, sondern diejenige der Umgebungsluft im Bereich der rotierenden Teile der Kupplung. Ein bestimmter Lufttemperaturwert wird dabei als Abschaltsignal ausgenutzt. Dieses Verfahren hat den Nachteil einer hohen Meßungenauigkeit sowie einer großen Trägheit Außerdem erfordert dieses Verfahren in der Regel ein Abschalten des Antriebsmotors.

Gemäß der Erfindung wird die Temperatur des Arbeitsmediums selbst gemessen. Im allgemeinen handelt es sich, wie bekannt, um ein Öl. Dies bedeutet, daß ein Sensor im Ölstrom plaziert wird.

Weiterhin wird gemäß der Erfindung bei Überschreiten eines bestimmten Temperaturwertes des Arbeitsmediums Arbeitsmedium aus dem Arbeitsraum abgezogen und in die Speicherkammer überführt. Ein Abschalten des Antriebsmotors ist somit nicht erforderlich. Dies hat den großen Vorteil, daß am Antrieb gegebenenfalls angebaute Nebenabtriebe unbeeinflußt weiterlaufen können.

## Patentansprüche

1. Hydrodynamische Kupplung mit konstanter Menge an Arbeitsmedium
1.1 mit einem Pumpenrad (1) und einem Turbinenrad (2) die miteinander einen Arbeitsraum bilden;
1.2 mit einer Speicherkammer (3.5);
1.3 mit Mitteln (5,6), um Arbeitsmedium zwischen dem Arbeitsraum (21) und der Speicherkammer (3.5) durch Einflußnahme von außen her während des Betriebes der Kupplung zu verschieben;
**gekennzeichnet durch** die folgenden Merkmale:
1.4 die Kupplung weist ein Gehäuse auf (3), das mit dem Pumpenrad (1) drehfest verbunden ist;
1.5 das Gehäuse (3) umschließt das Turbinenrad (2) unter Bildung eines Spaltes;
1.6 das Gehäuse (3) bildet axial neben dem Pumpenrad die Speicherkammer (3.5);
1.7 in der Speicherkammer (3.5) ist eine Staudruckpumpe (5) vorgesehen, die einen Rohrstutzen sowie ein am radial äußeren Ende des Rohrstutzens befindliches Mundstück aufweist;
1.8 das radial innere Ende der Staudruckpumpe steht mit dem Arbeitsraum in leitender Verbindung.

2. Kupplung nach Anspruch 1, **dadurch gekennzeichnet, daß** die Umfangswand des Gehäuses (3) im Bereich des Mundstückes der Staudruckpumpe zwecks Bildens einer ringförmigen Wanne ausgebeult ist.

3. Kupplung nach Anspruch 2, **dadurch gekennzeichnet, daß** die Wanne auf einem größeren Radius als der radial äußerste Punkt des Arbeitsraumes liegt.

4. Kupplung nach einem der Ansprüche 1 bis 3, **dadurch gekennzeichnet, daß** das Gehäuse (3) von einem Außengehäuse (7) umschlossen ist.

5. Kupplung nach Anspruch 4, **dadurch gekennzeichnet, daß** das Außengehäuse (7) im Bereich des Turbinenrades Lufteinlässe aufweist, ferner Luftauslässe.

6. Kupplung nach einem der Ansprüche 1 bis 5, **dadurch gekennzeichnet, daß** axial neben der Speicherkammer eine zweite Speicherkammer vorgesehen ist, die ebenfalls aus dem Gehäuse (3) gebildet ist.

7. Verfahren zum Betreiben einer Kupplung gemäß einem der Ansprüche 1 bis 6 mit den folgenden Merkmalen:
7.1 es wird die Temperatur des Arbeitsmediums selbst gemessen;
7.2 bei Überschreiten eines bestimmten Temperaturwertes des Arbeitsmediums wird das Volumen des im Arbeitsraum vorhandenen Arbeitsmediums verringert, und das Volumen des in der Speicherkammer vorhandenen Arbeitsmediums entsprechend erhöht.

8. Verfahren nach Anspruch 7, **dadurch gekennzeichnet, daß** die Temperaturüberwachung mit einer elektriscchen oder hydraulischen oder pneumatischen Ansteuerung eines Umsachaltventils (6) zwischen Arbeitsraum (21) und Speicherkammer (3.5, 229) kombiniert wird.

## Claims

1. Hydrodynamic coupling with constant amount of working medium.
1.1. with a pump wheel (1) and a turbine wheel (2) which together form a working space;
1.2. with a storage chamber (3.5);
1.3. with means (5, 6) to displace working medium between the working space (21) and the storage chamber (3.5) by exertion of influence from outside during operation of the coupling;
**characterised by** the following features:
1.4. the coupling has a housing (3) non-rotatably connected to the pump wheel (1);
1.5. the housing (3) encloses the turbine wheel (2) with formation of a gap;
1.6. the housing (3) forms the storage chamber (3.5) axially next to the pump wheel;
1.7. provided in the storage chamber (3.5) is a dynamic pressure pump (5) which has a pipe socket and a mouthpiece located at the radially outer end of the pipe socket;
1.8 the radially inner end of the dynamic pressure pump is conductively connected to the working space.

2. Coupling according to claim 1, **characterised in that** the peripheral wall of the housing (3) is bulged in the region of the mouthpiece of the dynamic pressure pump in order to form an annular trough.

3. Coupling according to claim 2, **characterised in that** the trough is located on a greater radius than the radially outermost point of the working space.

4. Coupling according to any one of claims 1 to 3, **characterised in that** the housing (3) is enclosed by an outer housing (7).

5. Coupling according to claim 4, **characterised in that** the outer housing (7) has air inlets in the region of the turbine wheel and also air outlets.

6. Coupling according to any one of claims 1 to 5, **characterised in that** provided axially next to the storage chamber is a second storage chamber also formed from the housing (3).

7. Method for operating a coupling according to any one of claims 1 to 6 with the following features:
7.1. the temperature of the working medium itself is measured;
7.2 when a specific temperature value of the working medium is exceeded the volume of the working medium in the working space is reduced and the volume of the working medium in the storage chamber is correspondingly increased.

8. Method according to claim 7, **characterised in that** temperature monitoring is combined with electrical or hydraulic or pneumatic control of a reversing valve (6) between the working space (21) and storage chamber (3.5, 229).

## Revendications

1. Accouplement hydrodynamique à débit constant de fluide de travail
1.1 avec une roue de pompe (1) et une roue de turbine (2) qui forment à elles deux un espace de travail ;
1.2 avec une chambre de stockage (3.5) ;
1.3 avec des moyens (5,6) destinés à déplacer du fluide de travail entre l'espace de travail (21) et la chambre de stockage (3.5) par le biais de l'influence exercée de l'extérieur pendant que l'accouplement est en action ;
**caractérisé par** les particularités suivantes :
1.4 l'accouplement présente un carter (3) qui est relié de manière solidaire en rotation, à la roue de pompe (1) ;
1.5 le carter (3) entoure la roue de turbine (2) avec formation d'un interstice ;
1.6 le carter (3) forme la chambre de stockage (3.5) à côté de la roue de pompe dans le sens axial;
1.7 il est prévu dans la chambre de stockage (3.5) une pompe à pression dynamique (5) qui présente une tubulure ainsi qu'un ajutage situé à l'extrémité radiale extérieure de la tubulure ;
1.8 l'extrémité radiale intérieure de la pompe à pression dynamique est en liaison conductrice avec l'espace de travail.

2. Accouplement selon la revendication 1, **caractérisé en ce que** la paroi périphérique du carter (3) est évasée dans la zone de l'ajutage de la pompe à pression dynamique dans le but de former une cuve annulaire.

3. Accouplement selon la revendication 2, **caractérisé en ce que** la cuve se trouve sur un rayon plus grand que le point radialement le plus à l'extérieur de l'espace de travail.

4. Accouplement selon l'une des revendications 1 à 3, **caractérisé en ce que** le carter (3) est entouré d'un carter extérieur (7).

5. Accouplement selon la revendication 4, **caractérisé en ce que** le carter extérieur (7) présente dans la zone de la roue de turbine des prises d'air ainsi que des sorties d'air.

6. Accouplement selon l'une des revendications 1 à 5, **caractérisé en ce qu'**il est prévu à côté de la chambre de stockage dans le sens axial une deuxième chambre de stockage qui est également formée par le carter (3).

7. Procédé pour l'entraînement d'un accouplement selon l'une des revendications 1 à 6, avec les particularités suivantes :
7.1 la température du fluide de travail lui-même est mesurée ;
7.2 lorsqu'une valeur de température déterminée du fluide de travail est dépassée, le volume du fluide de travail présent dans l'espace de travail est réduit et le volume du fluide de travail présent dans la chambre de stockage est augmenté de manière correspondante.

8. Procédé selon la revendication 7, **caractérisé en ce que** le contrôle de la température est combiné avec une commande électrique, hydraulique ou pneumatique d'une soupape d'inversion (6) entre l'espace de travail (21) et la chambre de stockage (3.5, 229).
